# EUROPÄISCHE PATENTSCHRIFT

(11) **EP 4 236 381 B1**
(45) Veröffentlichungstag und Bekanntmachung des Hinweises auf die Patenterteilung: **16.09.2026**
(21) Anmeldenummer: 23154182.2
(22) Anmeldetag: 31.01.2023
(51) Int. Cl.: H04W 4/02, H04L 67/12, H04W 4/38, H04W 4/80, H04W 84/18, H04W 4/18

(54) **SYSTEM UND VERFAHREN ZUM ÜBERMITTELN VON SENSORDATEN UND POSITIONSINFORMATIONEN SOWIE KOMMUNIKATIONSMODUL UND SENSOR**
SYSTEM AND METHOD FOR TRANSMITTING SENSOR DATA AND POSITION INFORMATION, AND COMMUNICATION MODULE AND SENSOR
SYSTÈME ET PROCÉDÉ DE TRANSMISSION DE DONNÉES DE CAPTEUR ET D'INFORMATIONS DE POSITION, MODULE DE COMMUNICATION ET CAPTEUR

(30) Priorität: 23.02.2022 DE 102022104331
(43) Veröffentlichungstag der Anmeldung: 30.08.2023
(73) Patentinhaber: VEGA Grieshaber KG, 77709 Wolfach (DE)
(72) Erfinder: Allgaier, Volker, 77716 Haslach i.K. (DE); Isenmann, Andreas, 77716 Haslach i.K. (DE); Hengstler, Clemens, 77716 Haslach (DE); Burgert, Florian, 77723 Gengenbach (DE)
(74) Vertreter: Patentanwälte Bauer Vorberg Kayser

(56) Entgegenhaltungen:
- US-A1- 2019 349 709
- US-A1- 2021 204 095

## Beschreibung

Die Erfindung betrifft ein System und ein Verfahren zum Übermitteln von Sensordaten und Positionsinformationen sowie ein hierfür einsetzbares Kommunikationsmodul und einen hierfür einsetzbaren Sensor.

Sensoren weisen mindestens eine Sensiereinheit auf, mit der eine physikalische Größe erfasst werden kann. Diese physikalische Größe kann beispielsweise einen Abstand, eine Länge, ein Volumen, einen Füllstand, einen Druck, eine Temperatur, eine Konzentration, eine Durchflussmenge, eine Feuchtigkeit, eine Lichtintensität, eine Spannung, ein Strom und/oder dergleichen umfassen. Aus der erfassten physikalischen Größe werden Sensordaten gewonnen, die für eine weitere Verwendung ausgegeben werden. Ein Empfänger der Sensordaten kann eine Datensammeleinheit sein, die gewonnene Sensordaten sammelt, speichert und gegebenenfalls einer Auswertung zuführt. Häufig befindet sich dabei der Sensor und die Datensammeleinheit an unterschiedlichen Orten.

In der Praxis sind häufig nicht nur die Sensordaten selbst von Interesse, sondern auch die Position des Sensors, der die Sensordaten gewonnen hat. Diese Positionsinformationen können verschiedentlich genutzt werden. Beispielhaft sei auf eine einfachere Zuordnung der Sensordaten in einer Produktionsstraße oder in einer Industrieanlage, eine Zuordnung bei beweglich angeordneten Sensoren (beispielsweise in oder an Fahrzeugen), eine vereinfachte Auffindbarkeit des Sensors bei Wartungen oder dergleichen hingewiesen.

Bei Sensoren, die in stationären Umgebungen angeordnet sind, kann die Position manuell in einem Inventarsystem hinterlegt werden. Diese Herangehensweise ist jedoch aufwändig und fehleranfällig.

Ein anderer Ansatz besteht darin, die Sensoren mit Positionsermittlungseinheiten auszustatten. Diese Positionsermittlungseinheiten können ein GNSS - Global Navigation Satellite System - nutzen, das beispielsweise durch GPS - Global Positioning System - oder Galileo gebildet ist. Derartige Positionsermittlungseinheiten benötigen jedoch eine ausreichende Signalstärke der Satellitensignale, was eine Messung in einem Keller oder unter einem Blechdach ausschließt oder sehr energieintensiv macht. Ferner erzeugen diese Positionsermittlungseinheiten nicht unerhebliche Zusatzkosten.

Ein weiteres Problem ergibt sich durch die Übermittlung der Positionsinformationen von dem Sensor zu der Datensammeleinheit. Eine besonders zuverlässige Zuordnung von Positionsinformationen zu Sensordaten bietet ein Ansatz, bei dem ein Messwert stets zusammen mit Positionsinformationen des zugehörigen Sensors übertragen werden. Allerdings vergrößert sich dadurch die zu übertragende Datenmenge nicht unerheblich. Insbesondere bei drahtlosen Übertragungen führt dies zu einer beträchtlichen Zusatzbelastung des Übertragungsweges. Zudem wird bei batteriebetriebenen Sensoren die Lebensdauer der Batterie reduziert.

US 2021/0204095 A1 offenbart Sensoren und Aktuatoren, die als Teilnehmer einer Infrastruktur für das Internet der Dinge ausgerollt werden können. Zum Registrieren des Sensors/Aktuators kommt ein mobiles Endgerät zum Einsatz, das Identifikationsinformationen von dem Sensor/Aktuator empfängt. Positionsinformationen, die das mobile Endgerät für sich selbst bestimmt hat, werden als Positionsinformationen des Sensor/Aktuators oder zum Ableiten von Positionsinformationen des Sensors/Aktuators genutzt und zusammen mit den Identifikationsinformationen an einen Server gesendet. US 2019/0349709 A1 beschreibt ein Verfahren zur Bestimmung einer Position eines Geräts, wobei das Gerät Positionsdaten von anderen Geräten beziehen kann, die Zugriff auf Positionsdaten haben oder die Informationen bereitstellen können, mit denen die Position des Geräts bestimmt werden kann.

Der Erfindung liegt die Aufgabe zugrunde, ein System, ein Kommunikationsmodul, einen Sensor und ein Verfahren bereitzustellen, mit denen Sensordaten und Positionsinformationen kostengünstig, energieeffizient und ressourcensparend übertragen werden können.

Diese Aufgabe ist durch die Merkmalskombinationen der nebengeordneten Ansprüche gelöst.

Weitere, besonders vorteilhafte Ausgestaltungen offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die vorliegende Offenbarung nutzt die Erkenntnis, dass mit einem sogenannten Crowdsourcing-Netzwerk und Teilnehmergeräten dieses Crowdsourcing-Netzwerks eine ressourcenschonende Gewinnung und Übermittlung von Positionsinformationen erreicht werden kann. Derartige Netzwerke nutzen eine Vielzahl von Teilnehmergeräten, die bei der Ortung eines Gerätes zusammenwirken und dadurch gewonnene Positionsinformationen an berechtigte Anfragende senden.

Ein derartiges Crowdsourcing-Netzwerk kann beispielsweise das "Wo ist?"-Netzwerk der Apple Inc. sein. Ein zu ortendes Gerät wird dort als "AirTag" bezeichnet. Ein AirTag sendet per Bluetooth zyklisch eine Kennung aus, die von Teilnehmergeräten des "Wo ist?"-Netzwerks im Senderadius des AirTags empfangen werden können. Unter Nutzung von meist satellitengestützten Positionsinformationen des Teilnehmergeräts werden Positionsinformationen des AirTags gewonnen und in der Cloud für einen berechtigten Anfragenden zur Verfügung gestellt. Auf diese Weise kann beispielsweise die Position eines verlorengegangenen Schlüsselbunds bestimmt oder zumindest eingegrenzt werden.

Ähnliche Ansätze für Crowdsourcing-Netzwerke werden beispielsweise von der Tile Inc., der Chipolo Inc. und Samsung Electronics angeboten und vertrieben, um lediglich einige Anbieter zu nennen.

Durch Nutzung eines derartigen Crowdsourcing-Netzwerks wird bei der vorliegenden Offenbarung die Übertragung von Sensordaten und Positionsinformationen aufgeteilt: Die Sensordaten werden über einen ersten Weg übertragen, die Positionsinformationen über einen zweiten Weg, nämlich über das Crowdsourcing-Netzwerk. Dazu weist der Sensor eine erste Ausgabeeinheit und eine zweite Ausgabeeinheit auf, wobei die erste Ausgabeeinheit zum Aussenden erzeugter Sensordaten an die Datensammeleinheit und die zweite Ausgabeeinheit zum periodischen Aussenden von Beacons in das Crowdsourcing-Netzwerk ausgebildet ist. Diese Beacons können durch Teilnehmergeräte des Crowdsourcing-Netzwerks, die sich in einem Empfangsbereich um die zweite Ausgabeeinheit befinden, empfangen und in das Crowdsourcing-Netzwerk weitergeleitet werden. Dabei sind die Beacons derart ausgestaltet, dass sie in dem Crowdsourcing-Netzwerk eine Erzeugung von Positionsinformation und eine Übermittlung der Positionsinformationen an die Datensammeleinheit auslösen können. Wie diese Funktion konkret erreicht werden kann, hängt - verständlicher Weise - von dem jeweils eingesetzten Crowdsourcing-Netzwerk ab.

Die Auftrennung der Übertragung in zwei getrennte Wege erlaubt eine Optimierung der Ausgabeeinheiten auf den jeweiligen Zweck, was zu einem ressourcen- und energieschonenden Betrieb des Sensors und damit des gesamten Systems führen kann. Ferner kann bei den Sensoren durch Nutzung des Crowdsourcing-Netzwerks auf einen GNSS-Empfänger oder sonstiger dedizierten Positionsermittlungseinheiten verzichtet werden, was sich begünstigend auf Kosten und Energieverbrauch auswirken kann. Eine aufwändige manuelle Erfassung der Position eines Sensors kann vermieden werden. Dennoch können in dem System der vorliegenden Offenbarung Schnittstellen vorhanden sein, mit denen die Position eines Sensors in einem Inventarsystem automatisiert erfasst und nachgeführt werden kann. Gleichzeitig ermöglichen die getrennten Wege einen verbesserten Diebstahlschutz, da die Positionsinformationen unabhängig von dem tatsächlichen Einsatz eines Sensors bereitgestellt und beispielsweise stets an einen Nutzer, der als berechtigt gelten kann, übermittelt werden können.

Das System gemäß der vorliegenden Offenbarung umfasst mindestens einen Sensor und eine Datensammeleinheit. Das Crowdsourcing-Netzwerk wird dabei nicht als Bestandteil dieses System angesehen. In der Praxis kann das Crowdsourcing-Netzwerk sogar von einem anderen Anbieter betrieben werden als das hier offenbarte System. Das System der vorliegenden Offenbarung umfasst Schnittstellen, um mit einem derartigen Crowdsourcing-Netzwerk zu interagieren. Für eine reibungslose Zusammenarbeit des Systems der vorliegenden Offenbarung und des Crowdsourcing-Netzwerks können die Schnittstellen des Systems geeignet an das Crowdsourcing-Netzwerk angepasst sein.

Der mindestens eine Sensor kann verschiedentlich ausgestaltet sein. Vorzugsweise ist der mindestens eine Sensor durch ein Feldgerät gebildet. Jeder Sensor kann mindestens eine Sensiereinheit aufweisen, die zum Erfassen einer physikalischen Größe ausgebildet ist und mit deren Hilfe der Sensor Sensordaten erzeugen kann. Darüber hinaus kann der Sensor - je nach Ausgestaltung - weitere Bestandteile umfassen. So kann der Sensor beispielsweise eine Energieversorgung (beispielsweise eine Batterie und/oder Mittel zum Energy-Harvesting), eine Ansteuerelektronik für die Sensiereinheit, eine Auswerteeinheit, Analog-Digital-Wandler, Filter, eine Linearisierungseinheit, eine Anzeigeeinheit und/oder sonstige Einheiten umfassen, um lediglich einige denkbaren Bestandteile beispielhaft zu nennen.

Die mindestens eine "Sensiereinheit" kann auf verschiedenste Weise und für die Erfassung verschiedenster physikalischer Größen ausgebildet sein. Lediglich beispielhaft und nicht auf diese beschränkend sei auf die Messung eines Abstands, eines Füllstands, einer Temperatur, eines Drucks, einer Vibration, einer Orientierung, einer Helligkeit, einer Konzentration, einer Feuchtigkeit, einer Spannung, eines Stroms oder einer Durchflussmenge hingewiesen.

Die "Ausgabeeinheiten" müssen nicht zwingend ausschließlich zur Ausgabe ausgebildet sein. Vielmehr ist es auch denkbar, dass die erste Ausgabeeinheit und/oder die zweite Ausgabeeinheit auch Empfangsfunktionalitäten in verschiedenster Ausprägung aufweisen kann. Hierdurch kann beispielsweise das Ausgeben erzeugter Sensordaten von außerhalb des Sensors angestoßen, der Sensor konfiguriert, aktiviert oder deaktiviert oder eine Quittierung eines erfolgreichen Ausgebens von Sensordaten empfangen werden. Derartige Empfangsfunktionalitäten stehen der hier offenbarten Nutzung der Ausgabeeinheiten nicht entgegen.

Zu der "Ausgabeeinheit" kann jeweils alles gerechnet werden, was zum Ausgeben der auszugebenden Daten benötigt wird. Dies können beispielsweise eine Antenne, einen Signalverstärker, einen Controller zum Erzeugen von Nachrichten oder auch Einheiten zum Paketieren, Abarbeiten eines Protokolls oder Kodieren umfassen, um lediglich einige denkbare Bestandteile zu nennen.

In einer Ausgestaltung ist eine "Ausgabeeinheit" ein Subsystem innerhalb des Sensors. So kann eine Ausgabeeinheit in der Sensorelektronik implementiert und/oder Teil einer Anzeige- und/oder Bedieneinheit sein. Eine austauschbare Anzeige- und/oder Bedieneinheit ermöglicht beispielsweise das Nachrüsten von Bestandssensoren für eine Verwendung in dem hier offenbarten System. In einer anderen Ausgestaltung ist eine Ausgabeeinheit als separates Modul ausgebildet, das - in einer Weiterbildung - steckbar und/oder sogar austauschbar ausgestaltet sein kann. Auch dies kann einen modularen Aufbau und ein Nachrüsten bestehender Sensoren begünstigen. Der Begriff "steckbar" kann sich dabei auf eine mechanische Steckbarkeit (z.B. Ausgabeeinheit wird in eine dafür vorgesehene Halterung oder einen Schlitz im Sensorgehäuse eingesteckt) und/oder auf eine elektrische Steckbarkeit (z.B. Ausgabeeinheit wird auf eine Buchse/einen Stecker am oder im Sensorgehäuse gesteckt) beziehen.

Auch die "Datensammeleinheit" kann auf verschiedenste Weise ausgebildet sein. Damit die vorliegende Offenbarung ihren Nutzen besonders gut entfalten kann, bietet es sich an, wenn der mindestens eine Sensor entfernt von der Datensammeleinheit angeordnet ist. Dieses "entfernt" kann in einer Ausgestaltung mehrere 10 Meter, in einer anderen Ausgestaltung mehrere 100 Meter, in einer weiteren Ausgestaltung mehrere Kilometer und in einer noch weiteren Ausgestaltung noch größere Entfernungen bedeuten. Sogar weltumspannende Systeme lassen sich aufbauen.

Dabei bietet es sich an, wenn die "Datensammeleinheit" durch eine Kombination aus Software und Hardware ausgebildet ist. So kann die Datensammeleinheit in einem Server implementiert sein. Es ist aber auch denkbar, dass die Datensammeleinheit in einer Cloud implementiert ist.

Unter dem Begriff "Sensordaten" wird vorliegend allgemein alles aufgefasst, was im Zusammenhang mit einer durch die Sensiereinheit erfassten physikalischen Größe stehen kann. In einer Ausgestaltung sind die Sensordaten digitalisierte Messwerte der Sensiereinheit. Dabei können diese Messwerte bereits aufbereitet sein, beispielsweise durch eine Linearisierung oder durch eine Mittelwertbildung aus mehreren Messungen. In einer anderen Ausgestaltung sind die Sensordaten eine starke Quantelung eines Messwerts. So können die Sensordaten beispielsweise angeben, dass ein erfasster Füllstand zu 0%, 25%, 50%, 75% oder 100% erreicht ist, um lediglich eine denkbare Quantelung beispielhaft zu nennen. In einer anderen Ausgestaltung sind die Sensordaten aus Messwerten abgeleitete Zustandsgrößen. Derartige Zustandsgrößen können beispielsweise angeben: "Füllstand im Sollbereich", "Füllstand unterhalb des Sollbereichs", "Füllstand oberhalb des Sollbereichs", "Füllstand kritisch niedrig", "Füllstand kritisch hoch", "Füllstand über Grenzstand" und "Füllstand unter Grenzstand", um lediglich eine denkbare Ausgestaltung einer Zustandsgröße beispielhaft zu nennen. Diese Zustandsgrößen können beispielsweise durch ganze oder natürliche Zahlen repräsentiert sein. Diese nicht als abschließend zu betrachtende Aufzählung denkbarer "Sensordaten" zeigt, wie allgemein der Begriff "Sensordaten" prinzipiell verstanden werden kann. Auf einem Übertragungsweg von zweiter Ausgabeeinheit zu Datensammeleinheit können die Sensordaten geeignet kodiert und gegebenenfalls verschlüsselt sein.

Ein "Beacon" ist allgemein ein Signal, das eine vordefinierte Struktur aufweist, vordefinierte Informationen enthält und üblicherweise kurz ist. Der Beacon wird periodisch ausgesandt, beispielsweise einmal pro Minute, alle 5 Minuten, einmal pro Stunde oder einmal pro Tag, um lediglich einige denkbare Periodenlängen beispielhaft zu nennen. Dabei kann eine Periodenlänge für den Beacon größer sein als eine Periodenlänge für die Sensordaten. Das Aussenden eines Beacons kann auch getriggert werden, beispielsweise durch eine Anfrage eines Benutzers oder der Datensammeleinheit. Die Struktur des Beacons kann von der Übertragungstechnik der zweiten Ausgabeeinheit abhängen. Die vordefinierten Informationen können eine Kennung der aussendenden Ausgabeeinheit und/oder einen Zeitstempel umfassen, um lediglich zwei denkbare Informationen zu nennen. "kurz" bedeutet üblicherweise, dass das Versenden eines Beacons maximal eine Millisekunde, vielfach weniger als wenige Mikrosekunden, teilweise sogar weniger als eine Mikrosekunde benötigt.

In einer Ausgestaltung sind die erste und die zweite Ausgabeeinheit für eine drahtlose Datenübermittlung ausgebildet. Auf diese Weise lassen sich die Sensoren flexibel positionieren. Insbesondere bei der zweiten Ausgabeeinheit wird durch eine drahtlose Datenübermittlung eine Anbindung an das Crowdsourcing-Netzwerk begünstigt, in einigen Fällen sogar erst ermöglicht.

In einer Ausgestaltung umfasst die erste Ausgabeeinheit eine Weitbereichsschnittstelle, wobei die Weitbereichsschnittstelle vorzugsweise durch eine Schnittstelle für LoRaWAN, LTE-M (Long Term Evolution for Machine type communication), NB-IoT (Narrow Band Internet of Things) oder GSM (Global System for Mobile communications) gebildet ist. Durch eine Weitbereichsschnittstelle kann eine entfernte Datensammeleinheit zuverlässig erreicht werden, ohne dass zusätzliche Gateways für eine Weitbereichskommunikation bereitgestellt werden müssen. Dabei lässt sich prinzipiell jede Weitbereichsschnittstelle einsetzen. Da vielfach die Energieeffizienz eingesetzter Sensoren eine Rolle spielt, wird vorzugsweise LPWAN (Low Power Wide Area Network) eingesetzt.

Unter der Abkürzung LPWAN werden verschiedene Klassen von Netzwerkprotokollen zur Verbindung von Niedrigenergiegeräten, wie batteriebetriebene Sensoren, mit einem Server zusammengefasst. Die Protokolle sind so ausgelegt, dass eine große Reichweite und ein niedriger Energieverbrauch der Endgeräte bei niedrigen Betriebskosten erreicht werden können. Beispielhafte LPWAN-Technologien sind LoRaWAN, LTE-M oder NB-IoT.

LoRaWAN, kurz für Long Range Wide Area Network, ist ein Standard der LoRa Alliance. Hierin sind sowohl Funktechnik als auch Protokolltechnik beschrieben.

LTE-M und NB-IoT sind Funkstandards, die von der 3GPP standardisiert wurden und im 4G Mobilfunknetz und auch unter 5G verfügbar sind. NB-IoT nutzt beispielsweise die durch die Weiterentwicklung der Mobilfunk-Endgeräte hin zu höheren Frequenzbändern freiwerdenden Mobilfunkfrequenzen des GSM-900 Frequenzband.

GSM - Global System for Mobile communications - ist ein Mobilfunkstandard, der zwar bereits in den 1990er Jahren eingeführt worden ist, aufgrund eines guten Netzausbaus, einer hohen Reichweite der Funkwellen und einer relativ effizienten Kommunikation aber dennoch für verschiedenste Zwecke gut einsetzbar ist.

In einer Ausgestaltung umfasst die zweite Ausgabeeinheit eine Nahbereichsschnittstelle, wobei die Nahbereichsschnittstelle vorzugsweise durch eine Schnittstelle für Bluetooth oder UWB - Ultra Wide Band - gebildet ist. Die Nutzung einer Nahbereichsschnittstelle ermöglicht eine Kommunikation über kurze Abstände. Als "kurze Abstände" werden hier Abstände von maximal 100 Metern, vorzugsweise von maximal 50 Metern, besonders bevorzugter Weise von maximal 25 Metern, ganz besonders bevorzugter Weise von maximal 15 Metern angesehen.

Bei Bluetooth handelt es sich um einen Industriestandard gemäß IEEE 802.15.1 für die Datenübertragung per Funksignal über kurze Distanzen. Aufgrund des hohen Verbreitungsgrades kann dadurch eine universelle zweite Ausgabeeinheit bereitgestellt werden.

UWB beschreibt einen Ansatz für Nahbereichskommunikation, bei dem ein Frequenzbereich mit großer Bandbreite von typischerweise mindestens 500MHz oder mindestens 20% des arithmetischen Mittelwerts zwischen einer untern und einer oberen Grenzfrequenz des genutzten Frequenzbands verwendet wird. Die Daten werden in möglichst kurzen Pulsen übertragen. UWB-Technologien sind beispielsweise in IEEE 802.15.3a oder IEEE 802.15.4a beschrieben. Auf diese Weise kann eine energieeffizient arbeitende zweite Ausgabeeinheit bereitgestellt werden. Zudem ist in einigen UWB-Technologien ein "Time of Flight"-Verfahren integriert, wodurch die Bestimmung von Positionsinformationen noch genauer erfolgen kann.

In einer Ausgestaltung umfasst das System zusätzlich eine Bewertungseinheit, die erzeugte Sensordaten hinsichtlich des Einhaltens vorgegebener Kriterien bewertet und bei Nicht-Einhalten der vorgegebenen Kriterien eine Warn-, Fehler- und/oder Alarmmeldung erzeugt und ausgibt. Ein vorgegebenes Kriterium kann beispielsweise ein Erreichen oder Unterschreiten eines unteren Schwellenwerts, ein Erreichen oder Überschreiten eines oberen Schwellenwerts oder ein Erreichen einer ungünstigen Lage umfassen. Ein unterer Schwellenwert kann beispielsweise ein minimaler Füllstand, ein minimaler Abstand, eine minimale Temperatur oder eine minimale Spannung sein. Ein oberer Schwellenwert kann beispielsweise ein maximaler Füllstand, eine maximale Temperatur, ein maximaler Strom, ein maximaler Druck, eine maximale Vibrationsamplitude oder eine maximale Spannung sein. Dabei können auch mehrere Kriterien vorgegeben werden, die unterschiedliche Meldungen und/oder unterschiedliche Stufen einer Meldung auslösen. So kann ein erster oberer Schwellenwert eine Warnmeldung und ein zweiter oberer Schwellenwert eine Alarmmeldung auslösen. Unterschiedliche Kriterien können sich auf unterschiedliche physikalische Größen beziehen, die wiederum unterschiedliche Warn-, Fehler- und/oder Alarmmeldungen hervorrufen. Auf diese Weise lässt sich flexibel auf Zustände reagieren, die durch einen der Sensoren erfasst werden.

In einer Weiterbildung ist die Bewertungseinheit in dem Sensor angeordnet und zum Ausgeben der Warn-, Fehler- und/oder Alarmmeldung über die zweite Ausgabeeinheit ausgebildet. Dadurch lässt sich ein Zusatznutzen für die zweite Ausgabeeinheit erreichen. Die Meldungen können dann von Teilnehmergeräten des Crowdsourcing-Netzwerks oder anderen Endgeräten, die sich zumindest zeitweise im Empfangsbereich der zweiten Ausgabeeinheit befinden, empfangen und an einen Nutzer ausgegeben werden. Dabei bietet es sich an, wenn lediglich solche Geräte empfangene Warn-, Fehler- und/oder Alarmmeldung auswerten können, die hierfür eine Berechtigung haben. Dies kann beispielsweise durch Kenntnis eines Schlüssels für eine Entschlüsselung oder eine sonstige Verknüpfung mit dem jeweils aussendenden Sensor sichergestellt werden. Diese Funktionalität kann beispielsweise Personen, die eine Anlage überwachen, oder Wartungspersonen bei deren Arbeit unterstützen.

In einer Ausgestaltung ist die Datensammeleinheit dazu ausgebildet, empfangene Sensordaten und/oder Positionsinformationen in einer Datenbank abzulegen, wobei die Datenbank vorzugsweise dazu ausgebildet ist, Sensordaten und Positionsinformationen für jeden der Sensoren gemeinsam abzuspeichern. Dabei kann die Datenbank Bestandteil der Datensammeleinheit oder mit der Datensammeleinheit kommunizierend verbunden sein. Das Ablegen empfangener Daten in einer Datenbank ermöglicht eine übersichtliche, strukturierte und ressourcensparende Speicherung der Daten. Dabei bietet es sich an, wenn empfangene Sensordaten und Positionsinformationen aus derselben Quelle, das heißt demselben Sensor und/oder derselben Sensiereinheit, mit einem Bezug zueinander abgespeichert werden. Dies kann beispielsweise durch ein Abspeichern in demselben Datensatz oder durch Abspeichern einer eindeutigen Referenz erfolgen. Ein gemeinsames Abspeichern "für jeden Sensor gemeinsam" bedeutet, dass Sensordaten und/oder Positionsinformationen, die über einen Zeitraum hinweg von einem Sensor empfangen werden, mit einem Bezug zueinander abgespeichert werden, beispielsweise durch Speichern einer Referenz (z.B. einer Identifikationsnummer des Sensors) und/oder durch Abspeichern in einem gemeinsamen Datensatz. Auf diese Weise kann eine Nutzung gewonnener Daten vereinfacht werden.

In einer Ausgestaltung umfasst das System zusätzlich eines Bereitstellungseinheit, wobei die Bereitstellungseinheit dazu ausgebildet ist, durch die Datensammeleinheit gespeicherte Sensordaten und/oder Positionsinformationen an ein Endgerät eines Benutzers auszugeben. Dies ermöglicht eine Nutzung gewonnener Daten durch einen Benutzer. Dabei kann die Bereitstellungseinheit die Daten derart an den Benutzer bereitstellen, dass die Übermittlung der Sensordaten und Positionsinformationen über unterschiedliche Wege für den Benutzer nicht sichtbar wird. Damit unterscheidet sich die Nutzung der Daten, die mit der vorliegend offenbarten Technik übertragen worden sind, nicht vor einer Nutzung von bekannten Übermittelungstechniken. In einer Ausgestaltung kann die Bereitstellungseinheit einen Web-Server umfassen, der die durch die Datensammeleinheit gesammelten und abgespeicherten Sensordaten und/oder Positionsinformationen für einen Nutzer bereitstellt, beispielsweise grafisch darstellt. In einer anderen Ausgestaltung kann die Bereitstellungseinheit ein Inventarsystem umfassen, das beispielsweise im Einsatz befindliche Sensoren, deren Einsatzort, deren Zustand und/oder sonstige potenziell relevante Informationen für einen Benutzer bereitstellt.

In einer Weiterbindung ist die Bereitstellungseinheit dazu ausgebildet, basierend auf vordefinierten oder definierbaren Zugriffsberechtigungen eine Berechtigungsprüfung für einen Zugriff auf gespeicherte Sensordaten und/oder Positionsinformationen vorzunehmen. Auf diese Weise kann ein unberechtigter Zugriff verhindert und/oder unterschiedlichen Benutzern unterschiedliche Daten und/oder unterschiedliche Detailgrade der Daten dargestellt werden. Gleichzeitig kann hierdurch ein Beitrag für einen Diebstahlschutz geleistet werden. Es ist auch möglich, dass eine Zugriffsberechtigung anlassbezogen und/oder temporär vergeben wird. Dies kann beispielsweise einer Wartungsperson das Auffinden eines defekten und/oder zu wartenden Sensors und/oder ein Abschätzen der Dauer eines Wartungseinsatzes erleichtern.

In einer Ausgestaltung umfasst die zweite Ausgabeeinheit eine separate Energieversorgung oder es ist der zweiten Ausgabeeinheit eine separate Energieversorgung zugeordnet, wobei die separate Energieversorgung zur Versorgung der zweiten Ausgabeeinheit ausgebildet ist und vorzugsweise eine Batterie und/oder Mittel für ein Energy-Harvesting umfasst. Auf diese Weise können Positionsinformationen auch dann übermittelt werden, wenn der Sensor aktuell nicht in Betrieb ist, beispielsweise bei Einlagern des Sensors in einem Lager oder während eines Transports des Sensors. Eine Batterie kann beispielsweise eine Knopfzelle sein. Energy-Harvesting bedeutet, dass elektrische Energie aus anderen, am Einsatzort des Sensors vorhandenen Energieformen gewonnen wird, beispielsweise Energie aus elektromagnetischen Feldern, Energie aus veränderlichen Magnetfeldern, Schwingungsenergie oder Wärmeenergie.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen:
- Fig. 1: eine schematische Darstellung eines Ausführungsbeispiels eines Systems gemäß der vorliegenden Offenbarung zusammen mit einzelnen Bestandteilen eines Crowdsourcing-Netzwerks und
- Fig. 2: ein Ablaufdiagramm eines Ausführungsbeispiels eines Verfahrens gemäß der vorliegenden Offenbarung.

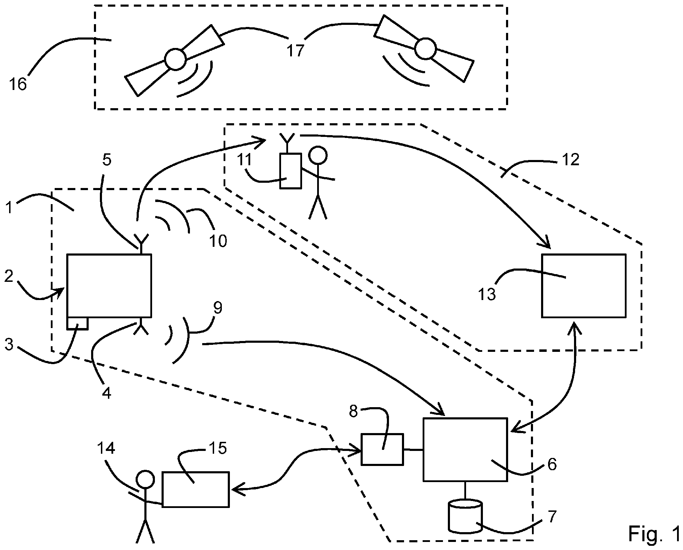

Fig. 1 zeigt schematisch Bestandteile eines Ausführungsbeispiels eines Systems 1 gemäß der vorliegenden Offenbarung sowie dessen prinzipielle Arbeitsweise im Zusammenspiel mit anderen Komponenten. Das System 1 umfasst mindestens einen Sensor 2, von denen in Fig. 1 der Übersichtlichkeit wegen lediglich ein einzelner Sensor 2 dargestellt ist. Der Sensor 2 umfasst eine Sensiereinheit 3, die in Fig. 1 schematisch durch ein Rechteck dargestellt ist. Der Sensor 2 umfasst ferner eine erste Ausgabeeinheit 4 und eine zweite Ausgabeeinheit 5, die in Fig. 1 jeweils durch ein Antennensymbol angedeutet sind. Es sei darauf hingewiesen, dass die beiden Ausgabeeinheiten 4, 5 neben einer Antenne verständlicher Weise noch weitere Komponenten umfassen dürfte, beispielsweise eine Kodiereinheit, eine Moduliereinheit und einen Verstärker. Die erste Ausgabeeinheit 4 ist für eine Ausgabe in ein Weitbereichsnetzwerk, beispielsweise LoRaWAN, NB-IoT, GSM oder dergleichen, und die zweite Ausgabeeinheit 5 für eine Ausgabe im Nahbereich, beispielsweise mittels Bluetooth, UWB oder dergleichen, ausgebildet. Das System 1 umfasst ferner eine Datensammeleinheit 6, eine Datenbank 7 sowie eine Bereitstellungseinheit 8, wobei die Datenbank 7 und die Bereitstellungseinheit 8 jeweils kommunizierend mit der Datensammeleinheit 6 verbunden sind. Die Datensammeleinheit kann in ein Inventarsystem integriert oder mit diesem kommunizierend verbunden sein.

Beim Betrieb des Systems 1 erfasst die Sensiereinheit 3 eine physikalische Größe, beispielsweise einen Füllstand, einen Druck oder eine Temperatur, und erzeugt daraus Sensordaten. Hierzu kann der Sensor eine Ansteuerschaltung zum Ansteuern der Sensiereinheit 3, eine Auswerteeinheit zum Auswerte der elektrischen Signale der Sensiereinheit 3, eine Filtereinheit, ein Analog-Digital-Wandler, eine Linearisierungseinheit und sonstige Komponenten umfassen. Die Sensordaten werden durch die erste Ausgabeeinheit 4 ausgesandt. In Fig. 1 sind die ausgesandten Sensordaten als Funkwellen symbolisiert, die mit dem Bezugszeichen 9 bezeichnet sind. Das Ausgeben der Sensordaten 9 kann periodisch erfolgen, beispielsweise nach Ablauf einer Sekunde, von 15 Sekunden oder einer Minute. Dabei können beim Aussenden der Sensordaten 9 auch Daten aus mehreren Messungen gemeinsam ausgegeben werden. Die Sensordaten 9 werden durch die Datensammeleinheit 6 empfangen, die die Sensordaten 9 in der Datenbank 7 abspeichert, wobei die Sensordaten 9 eines Sensors 2 gemeinsam abgespeichert werden, beispielsweise in einem gemeinsamen Datensatz oder einer gemeinsamen Datenstruktur.

Die zweite Ausgabeeinheit 5 sendet periodisch einen Beacon 10 aus, der in Fig. 1 ebenfalls als Funkwellen symbolisiert ist. In einem Empfangsbereich dieser Funkwellen befindet sich in Fig. 1 ein zufällig vorbeikommendes Teilnehmergerät 11 eines Crowdsourcing-Netzwerks 12. Das Teilnehmergerät 11 empfängt und verarbeitet den Beacon 10, der auf diese Weise in dem Crowdsourcing-Netzwerk 12 das Erzeugen und Übermitteln von Positionsinformationen (und eventuell weiterer Informationen, wie beispielsweise eines Umgebungsluftdrucks oder einer Umgebungstemperatur) auslöst. Das Teilnehmergerät 11 kann seine eigene Position unter Verwendung eines GNSS 16 bestimmen, von dem beispielhaft zwei Satelliten 17 in Fig. 1 dargestellt sind. Für das Verarbeiten des Beacons 10 extrahiert das Teilnehmergerät 11 eine mit dem Beacon übertragene Kennung und sendet diese zusammen mit der eigenen Position, gegebenenfalls mit Abstandsinformationen zu der zweiten Ausgabeeinheit 5 und gegebenenfalls mit weiteren Informationen an ein Crowdsourcing-Cloud-System 13, das einen zentraler Punkt des Crowdsourcing-Netzwerks bildet. Dort werden die empfangenen Informationen weiterverarbeitet und Positionsinformationen für die zweite Ausgabeeinheit 5 erzeugt. Diese Positionsinformationen werden dann zu der Datensammeleinheit 6 übermittelt. Die Kommunikation zwischen Crowdsourcing-Cloud-System 13 und Datensammeleinheit 6 ist durch einen Doppelpfeil symbolisiert, das heißt es findet eine bidirektionale Kommunikation statt. So kann die Datensammeleinheit 6 beispielsweise bei dem Crowdsourcing-Cloud-System 13 unter Angabe einer Kennung des anzufragenden Sensors eine Erzeugung von Positionsinformationen anstoßen oder in dem Crowdsourcing-Cloud-System 13 für eine Kennung vorhandene Positionsinformationen abfragen. Prinzipiell denkbar wäre aber auch, dass das Crowdsourcing-Cloud-System 13 erzeugte Positionsinformationen automatisch zusammen mit einer Kennung des zugehörigen Sensors an die Datensammeleinheit 6 übermittelt. Die Datensammeleinheit 6 speichert empfangene Positionsinformationen in der Datenbank 7 ab. Da der Datensammeleinheit 6 die Kennung des betreffenden Sensors bekannt ist, können die Positionsinformationen gemeinsam mit den Sensordaten des Sensors 2 abgespeichert werden, beispielsweise durch Referenzieren mit der Kennung oder durch Abspeichern in derselben Datenstruktur oder demselben Datensatz.

Die Bereitstellungseinheit 8 stellt eine Schnittstelle für einen Zugriff auf Daten dar, die in der Datenbank 7 gespeichert worden sind. Hierzu kann sich ein Benutzer 14 mittels eines Endgeräts 15, beispielsweise ein Laptop, ein Tablet oder ein Smartphone, mit der Bereitstellungseinheit 8 verbinden und für den Benutzer 14 freigegebene Sensordaten, Positionsinformationen und sonstige Informationen abfragen und weiter verwerten. Eine Verbindung zwischen Endgerät 15 und Bereitstellungseinheit 8 kann beispielsweise mittels HTTPS (Hypertext Transfer Protocol Secure) erfolgen.

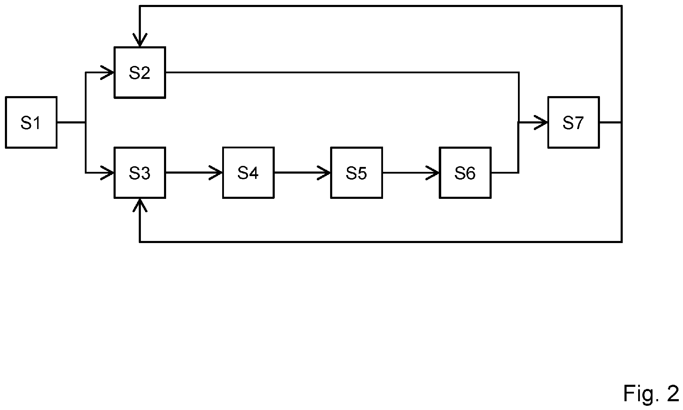

Fig. 2 zeigt ein Ablaufdiagramm für ein Ausführungsbeispiel eines Verfahrens gemäß der vorliegenden Offenbarung. In Schritt S1 wird das System zunächst gestartet und initialisiert. In Schritt S2 werden erzeugte Sensordaten mittels der ersten Ausgabeeinheit 4 an die Datensammeleinheit 6 ausgesendet. In Schritt S3 wird durch die zweite Ausgabeeinheit 5 ein Beacon ausgesendet, der in Schritt S4 durch ein Teilnehmergerät 11 eines Crowdsourcing-Netzwerks 12 empfangen wird. In Schritt S5 werden basierend auf dem Beacon und basierend auf einer Position des Teilnehmergeräts 11 Positionsinformationen erzeugt, die in Schritt S6 an die Datensammeleinheit 6 weitergeleitet werden. In Schritt S7 werden die Sensordaten und/oder die Positionsinformationen durch die Datensammeleinheit 6 empfangen und in der Datenbank 7 abgespeichert. Danach wird das Verfahren beendet oder kehrt - eventuell nach einer Wartezeit - zu Schritt S2 und/oder Schritt S3 zurück. Dabei kann der Zyklus S2 → S7 → S2 und der Zyklus S3 → S4 → S5 → S6 → S7 → S3 unterschiedlich schnell durchlaufen werden.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

Schließlich sei ausdrücklich darauf hingewiesen, dass des voranstehend beschriebenen Ausführungsbeispiels lediglich zur Erörterung der beanspruchten Lehre dienen, diese jedoch nicht auf das Ausführungsbeispiel einschränken.

### Bezugszeichenliste

- 1: System
- 2: Sensor
- 3: Sensiereinheit
- 4: erste Ausgabeeinheit
- 5: zweite Ausgabeeinheit
- 6: Datensammeleinheit
- 7: Datenbank
- 8: Bereitstellungseinheit
- 9: ausgesandte Sensordaten
- 10: Beacon
- 11: Teilnehmergerät
- 12: Crowdsourcing-Netzwerk
- 13: Crowdsourcing-Cloud-System
- 14: Benutzer
- 15: Endgerät des Benutzers
- 16: GNSS
- 17: Satellit des GNSS

## Patentansprüche

1. System zum Übermitteln von Sensordaten und Positionsinformationen eines Sensors, umfassend mindestens einen Sensor (2) und eine Datensammeleinheit (6),
wobei der mindestens eine Sensor (2) jeweils mindestens eine Sensiereinheit (3) zum Erfassen einer physikalischen Größe aufweist und zum Erzeugen von Sensordaten (9) basierend auf der jeweils erfassten physikalischen Größe ausgebildet ist,
wobei der mindestens eine Sensor (2) jeweils zusätzlich eine erste Ausgabeeinheit (4) und eine zweite Ausgabeeinheit (5) aufweist,
wobei die erste Ausgabeeinheit (4) zum Aussenden erzeugter Sensordaten (9) an die Datensammeleinheit (6) ausgebildet ist,
wobei die zweite Ausgabeeinheit (5) zum periodischen Aussenden von Beacons (10) in ein Crowdsourcing-Netzwerk (12) ausgebildet ist, wobei die Beacons (10) dazu ausgebildet sind, in dem Crowdsourcing-Netzwerk (12) unter Nutzung mindestens eines Teilnehmergeräts (11) des Crowdsourcing-Netzwerks (12) eine Erzeugung von Positionsinformationen und eine Übermittelung der Positionsinformationen an die Datensammeleinheit (6) auszulösen.

2. System nach Anspruch 1, **dadurch gekennzeichnet, dass** die erste und die zweite Ausgabeeinheit (4, 5) für eine drahtlose Datenübermittlung ausgebildet sind.

3. System nach Anspruch 1 oder 2, **dadurch gekennzeichnet, dass** die erste Ausgabeeinheit (4) eine Weitbereichsschnittstelle umfasst, wobei die Weitbereichsschnittstelle vorzugsweise durch eine Schnittstelle für LoRaWAN, LTE-M, NB-IoT oder GSM gebildet ist.

4. System nach einem der Ansprüche 1 bis 3, **dadurch gekennzeichnet, dass** die zweite Ausgabeeinheit (5) eine Nahbereichsschnittstelle umfasst, wobei die Nahbereichsschnittstelle vorzugsweise durch eine Schnittstelle für Bluetooth oder UWB - Ultra Wide Band - gebildet ist.

5. System nach einem der Ansprüche 1 bis 4, das zusätzlich eine Bewertungseinheit umfasst, die erzeugte Sensordaten (9) hinsichtlich des Einhaltens vorgegebener Kriterien bewertet und bei Nicht-Einhalten der vorgegebenen Kriterien eine Warn-, Fehler- und/oder Alarmmeldung erzeugt und ausgibt.

6. System nach Anspruch 5, **dadurch gekennzeichnet, dass** die Bewertungseinheit in dem Sensor (2) angeordnet und zum Ausgeben der Warn-, Fehler- und/oder Alarmmeldung über die zweite Ausgabeeinheit ausgebildet ist.

7. System nach einem der Ansprüche 1 bis 6, **dadurch gekennzeichnet, dass** die Datensammeleinheit (6) dazu ausgebildet ist, empfangene Sensordaten (9) und/oder Positionsinformationen in einer Datenbank (7) abzulegen, wobei die Datenbank (7) vorzugsweise dazu ausgebildet ist, Sensordaten (9) und Positionsinformationen für jeden der Sensoren (2) gemeinsam abzuspeichern.

8. System nach einem der Ansprüche 1 bis 7, das zusätzlich eine Bereitstellungseinheit (8) umfasst, wobei die Bereitstellungseinheit (8) dazu ausgebildet ist, durch die Datensammeleinheit (6) gespeicherte Sensordaten (9) und/oder Positionsinformationen an ein Endgerät (15) eines Benutzers (14) auszugeben.

9. System nach Anspruch 8, **dadurch gekennzeichnet, dass** die Bereitstellungseinheit (8) dazu ausgebildet ist, basierend auf vordefinierten oder definierbaren Zugriffsberechtigungen eine Berechtigungsprüfung für einen Zugriff auf gespeicherte Sensordaten (9) und/oder Positionsinformationen vorzunehmen

10. System nach einem der Ansprüche 1 bis 9, **dadurch gekennzeichnet, dass** die zweite Ausgabeeinheit (5) eine separate Energieversorgung umfasst oder der zweiten Ausgabeeinheit (5) eine separate Energieversorgung zugeordnet ist, wobei die separate Energieversorgung zur Versorgung der zweiten Ausgabeeinheit ausgebildet ist und vorzugsweise eine Batterie und/oder Mittel für ein Energy-Harvesting umfasst.

11. Kommunikationsmodul für einen Sensor zur Verwendung in einem System nach einem der Ansprüche 1 bis 10, umfassend einen Sensordateneingang, eine erste Ausgabeeinheit (4) und eine zweite Ausgabeeinheit (5),
wobei der Sensordateneingang zum Eingeben von Sensordaten (9) des Sensors (2) ausgebildet ist,
wobei die erste Ausgabeeinheit (4) zum Aussenden erzeugter Sensordaten (9) an die Datensammeleinheit (6) ausgebildet ist,
wobei die zweite Ausgabeeinheit (5) zum periodischen Aussenden von Beacons (10) in ein Crowdsourcing-Netzwerk (12) ausgebildet ist, wobei die Beacons (10) dazu ausgebildet sind, in dem Crowdsourcing-Netzwerk (12) unter Nutzung mindestens eines Teilnehmergeräts (11) des Crowdsourcing-Netzwerks (12) eine Erzeugung von Positionsinformationen und eine Übermittelung der Positionsinformationen an die Datensammeleinheit (6) auszulösen

12. Sensor zur Verwendung in einem System nach einem der Ansprüche 1 bis 10, umfassend mindestens eine Sensiereinheit (3), eine Auswerteeinheit, eine erste Ausgabeeinheit (4) und eine zweite Ausgabeeinheit (5),
wobei die mindestens eine Sensiereinheit (3) zum Erfassen einer physikalischen Größe ausgebildet ist,
wobei die Auswerteeinheit kommunizierend mit der mindestens einen Sensiereinheit (3) verbunden und zum Erzeugen von Sensordaten (9) basierend auf der jeweils erfassten physikalischen Größe ausgebildet ist,
wobei die erste Ausgabeeinheit (4) zum Aussenden erzeugter Sensordaten (9) an die Datensammeleinheit (6) ausgebildet ist,
wobei die zweite Ausgabeeinheit (5) zum periodischen Aussenden von Beacons (10) in ein Crowdsourcing-Netzwerk (12) ausgebildet ist, wobei die Beacons (10) dazu ausgebildet sind, in dem Crowdsourcing-Netzwerk (12) unter Nutzung mindestens eines Teilnehmergeräts (11) des Crowdsourcing-Netzwerks (12) eine Erzeugung von Positionsinformationen und eine Übermittelung der Positionsinformationen an die Datensammeleinheit (6) auszulösen

13. Sensor nach Anspruch 12, der zum Bereitstellen der ersten und zweiten Ausgabeeinheit (4, 5) ein Kommunikationsmodul nach Anspruch 11 umfasst, wobei die Auswerteeinheit kommunizierend mit dem Sensordateneingang des Kommunikationsmoduls verbunden und zum Übertragen von Sensordaten (9) an den Sensordateneingang ausgebildet ist.

14. Verfahren zum Übermitteln von Sensordaten und Positionsinformationen eines Sensors, unter Verwendung eines Systems nach einem der Ansprüche 1 bis 10, umfassend:
Aussenden (S2) erzeugter Sensordaten (9) mittels einer ersten Ausgabeeinheit (4) des Sensors (2), wobei der Sensor (2) mindestens eine Sensiereinheit (3) zum Erfassen einer physikalischen Größe aufweist und zum Erzeugen von Sensordaten (9) basierend auf der jeweils erfassten physikalischen Größe ausgebildet ist,
periodisches Aussenden (S3) eines Beacons (10) mittels einer zweiten Ausgabeeinheit (5) des Sensors (2) in das Crowdsourcing-Netzwerk (12), wobei der Beacon (10) zur Erzeugung von Positionsinformationen in dem Crowdsourcing-Netzwerks (12) ausgebildet ist,
Empfangen (S4) des Beacons (10) durch ein Teilnehmergerät (11) des Crowdsourcing-Netzwerks (12),
Erzeugen (S5) von Positionsinformationen basierend auf dem Beacon (10) und einer Position des Teilnehmergeräts (11),
Weiterleiten (S6) der Positionsinformationen an eine Datensammeleinheit (6) und
Empfangen und Speichern (S7) der Sensordaten (9) und/oder der Positionsinformationen durch die Datensammeleinheit (6).

## Claims

1. A system for transmitting sensor data and positional information of a sensor, comprising at least one sensor (2) and a data collection unit (6),
wherein the at least one sensor (2) comprises in each case at least one sensing unit (3) for detecting a physical quantity and is configured for generating sensor data (9) based on the respectively detected physical quantity,
wherein the at least one sensor (2), additionally, comprises in each case a first output unit (4) and a second output unit (5),
wherein the first output unit (4) is configured for emitting generated sensor data (9) to the data collection unit (6),
wherein the second output unit (5) is configured for periodically emitting beacons (10) into a crowdsourcing network (12), wherein the beacons (10) are configured for triggering in the crowdsourcing network (12) a generation of positional information and a transmission of the positional information to the data collection unit (6), using at least one subscriber device (11) of the crowdsourcing network (12).

2. The system according to claim 1, **characterized in that** the first and second output units (4, 5) are configured for a wireless data transmission.

3. The system according to claim 1 or 2, **characterized in that** the first output unit (4) comprises a wide area interface, wherein the wide area interface is preferably formed by an interface for LoRaWAN, LTE-M, NB-IoT or GSM.

4. The system according to any one of the claims 1 to 3, **characterized in that** the second output unit (5) comprises a short-range interface, wherein the short-range interface is preferably formed by an interface for Bluetooth or UWB - Ultra Wide Band.

5. The system according to any one of the claims 1 to 4, which additionally comprises an evaluation unit, which evaluates generated sensor data (9) with regard to the compliance with predetermined criteria and generates a warning notification, error notification and/or an alert in the case of non-compliance with predetermined criteria.

6. The system according to claim 5, **characterized in that** the evaluation unit is arranged in the sensor (2) and configured for outputting the warning notification, error notification and/or alert via the second output unit.

7. The system according to any one of the claims 1 to 6, **characterized in that** the data collection unit (6) is configured for depositing received sensor data (9) and/or positional information in a database (7), wherein the database (7) is preferably configured for storing sensor data (9) and positional information for each of the sensors (2) together.

8. The system according to any one of the claims 1 to 7, which additionally comprises a supplying unit (8), wherein the supplying unit (8) is configured for outputting sensor data (9) and/or positional information stored by the data collection unit (6) to a terminal device (15) of a user (14).

9. The system according to claim 8, **characterized in that** the supplying unit (8) is configured for performing, based on predefined or definable access authorizations, an authorization check for an access to stored sensor data (9) and/or positional information.

10. The system according to any one of the claims 1 to 9, **characterized in that** the second output unit (5) comprises a separate power supply unit, or a separate power supply unit is assigned to the second output unit (5), wherein the separate power supply unit is configured for supplying the second output unit and preferably comprises a battery and/or energy harvesting means.

11. A communication module for a sensor for use in a system according to any one of the claims 1, 10, comprising a sensor data input, a first output unit (4) and a second output unit (5),
wherein the sensor data input is configured for inputting sensor data (9) of the sensor (2),
wherein the first output unit (4) is configured for emitting generated sensor data (9) to the data collection unit (6),
wherein the second output unit (5) is configured for periodically emitting beacons (10) into a crowdsourcing network (12), wherein the beacons (10) are configured for triggering in the crowdsourcing network (12) a generation of positional information and a transmission of the positional information to the data collection unit (6), using at least one subscriber device (11) of the crowdsourcing network (12).

12. A sensor for use in a system according to any one of the claims 1 to 10, comprising at least one sensing unit (3), an evaluation unit, a first output unit (4) and a second output unit (5),
wherein the at least one sensing unit (3) is configured for detecting a physical quantity,
wherein the evaluation unit is connected in a communicating manner to the at least one sensing unit (3) and is configured for generating sensor data (9) based on the respectively detected physical quantity,
wherein the first output unit (4) is configured for emitting generated sensor data (9) to the data collection unit (6),
wherein the second output unit (5) is configured for periodically emitting beacons (10) into a crowdsourcing network (12), wherein the beacons (10) are configured for triggering in the crowdsourcing network (12) a generation of positional information and a transmission of the positional information to the data collection unit (6), using at least one subscriber device (11) of the crowdsourcing network (12).

13. The sensor according to claim 12, which, for providing the first and second output units (4, 5), comprises a communication module according to claim 11, wherein the evaluation unit is connected in a communicating manner to the sensor data input of the communication module and configured for transmitting sensor data (9) to the sensor data input.

14. A method for transmitting sensor data and positional information of a sensor, using a system according to any one of the claims 1 to 10, comprising:
emitting (S2) generated sensor data (9) by means of a first output unit (4) of the sensor (2), wherein the sensor (2) comprises at least one sensing unit (3) for detecting a physical quantity and is configured for generating sensor data (9) based on the respectively detected physical quantity,
periodically emitting (S3) a beacon (10) into the crowdsourcing network (12) by means of a second output unit (5) of the sensor (2), wherein the beacon (10) is configured for generating positional information in the crowdsourcing network (12),
receiving (S4) the beacon (10) by a subscriber device (11) of the crowdsourcing network (12),
generating (S5) positional information based on the beacon (10) and a position of the subscriber device (11),
forwarding (S6) the positional information to a data collection unit (6), and
receiving and storing (S7) the sensor data (9) and/or positional information by the data collection unit (6).

## Revendications

1. Système de transmission de données de capteur et d'informations de position d'un capteur, comprenant au moins un capteur (2) et une unité de collecte (6) de données,
dans lequel l'au moins un capteur (2) présente respectivement au moins une unité de détection (3) pour acquérir une grandeur physique et est configuré pour générer des données (9) de capteur sur la base de la grandeur physique respectivement acquise,
dans lequel l'au moins un capteur (2) présente respectivement en plus une première unité de sortie (4) et une deuxième unité de sortie (5),
dans lequel la première unité de sortie (4) est configurée pour envoyer des données (9) de capteur générées à l'unité de collecte (6) de données,
dans lequel la deuxième unité de sortie (5) est configurée pour envoyer périodiquement des balises (10) dans un réseau de production participative (12), dans lequel les balises (10) sont configurées pour déclencher dans le réseau de production participative (12) une génération d'informations de position et une transmission des informations de position à l'unité de collecte (6) de données en utilisant au moins un appareil participant (11) du réseau de production participative (12).

2. Système selon la revendication 1, **caractérisé en ce que** la première et la deuxième unité de sortie (4, 5) sont configurées pour une transmission de données sans fil.

3. Système selon la revendication 1 ou la revendication 2, **caractérisé en ce que** la première unité de sortie (4) comprend une interface à longue portée, dans lequel l'interface à longue portée est formée de préférence par une interface pour LoRaWAN, LTE-M, NB-loT ou GSM.

4. Système selon l'une quelconque des revendications 1 à 3, **caractérisé en ce que** la deuxième unité de sortie (5) comprend une interface de proximité, dans lequel l'interface de proximité est formée de préférence par une interface pour Bluetooth ou bande ultra large UWB.

5. Système selon l'une quelconque des revendications 1 à 4, qui comprend en outre une unité d'évaluation qui évalue les données (9) de capteur générées en ce qui concerne le respect des critères prédéfinis et génère et émet un message d'avertissement, d'erreur et/ou d'alarme en cas de non-respect des critères prédéfinis.

6. Système selon la revendication 5, **caractérisé en ce que** l'unité d'évaluation est disposée dans le capteur (2) et configurée pour délivrer le message d'avertissement, d'erreur et/ou d'alarme via la deuxième unité de sortie.

7. Système selon l'une quelconque des revendications 1 à 6, **caractérisé en ce que** l'unité de collecte (6) de données est configurée pour stocker des données (9) de capteur et/ou des informations de position reçues dans une base de données (7), dans lequel la base de données (7) est de préférence configurée pour mettre en mémoire ensemble les données (9) de capteur et les informations de position pour chacun des capteurs (2).

8. Système selon l'une quelconque des revendications 1 à 7, qui comprend en outre une unité de mise à disposition (8), dans lequel l'unité de mise à disposition (8) est configurée pour délivrer des données (9) de capteur et/ou des informations de position enregistrées par l'unité de collecte (6) de données à un terminal (15) d'un utilisateur (14).

9. Système selon la revendication 8, **caractérisé en ce que** l'unité de mise à disposition (8) est configurée pour effectuer, sur la base d'autorisations d'accès prédéfinies ou définissables, un contrôle d'autorisation pour un accès à des données (9) de capteur et/ou des informations de position enregistrées.

10. Système selon l'une quelconque des revendications 1 à 9, **caractérisé en ce que** la deuxième unité de sortie (5) comprend une alimentation en énergie séparée ou une alimentation en énergie séparée est attribuée à la deuxième unité de sortie (5), dans lequel l'alimentation en énergie séparée est configurée pour alimenter la deuxième unité de sortie et comprend de préférence une batterie et/ou des moyens de récupération d'énergie.

11. Module de communication pour un capteur à utiliser dans un système selon l'une quelconque des revendications 1 à 10, comprenant une entrée de données de capteur, une première unité de sortie (4) et une deuxième unité de sortie (5),
dans lequel l'entrée de données de capteur est configurée pour entrer des données (9) de capteur du capteur (2),
dans lequel la première unité de sortie (4) est configurée pour envoyer des données (9) de capteur générées à l'unité de collecte (6) de données,
dans lequel la deuxième unité de sortie (5) est configurée pour envoyer périodiquement des balises (10) dans un réseau de production participative (12), dans lequel les balises (10) sont configurées pour déclencher dans le réseau de production participative (12) une génération d'informations de position et une transmission des informations de position à l'unité de collecte (6) de données en utilisant au moins un appareil participant (11) du réseau de production participative (12).

12. Capteur à utiliser dans un système selon l'une quelconque des revendications 1 à 10, comprenant au moins une unité de détection (3), une unité d'évaluation, une première unité de sortie (4) et une deuxième unité de sortie (5),
dans lequel l'au moins une unité de détection (3) est configurée pour acquérir une grandeur physique,
dans lequel l'unité d'évaluation est reliée en communication avec l'au moins une unité de détection (3) et configurée pour générer des données (9) de capteur sur la base de la grandeur physique respectivement acquise,
dans lequel la première unité de sortie (4) est configurée pour envoyer des données (9) de capteur générées à l'unité de collecte (6) de données,
dans lequel la deuxième unité de sortie (5) est configurée pour envoyer périodiquement des balises (10) dans un réseau de production participative (12), dans lequel les balises (10) sont configurées pour déclencher dans le réseau de production participative (12) une génération d'informations de position et une transmission des informations de position à l'unité de collecte (6) de données en utilisant au moins un appareil participant (11) du réseau de production participative (12).

13. Capteur selon la revendication 12, qui comprend un module de communication selon la revendication 11 pour mettre à disposition la première et la deuxième unité de sortie (4, 5), dans lequel l'unité d'évaluation est reliée en communication à l'entrée de données de capteur du module de communication et configurée pour transmettre des données (9) de capteur à l'entrée de données de capteur.

14. Procédé de transmission de données de capteur et d'informations de position d'un capteur, en utilisant un système selon l'une quelconque des revendications 1 à 10, comprenant :
l'envoi (S2) de données (9) de capteur générées au moyen d'une première unité de sortie (4) du capteur (2), dans lequel le capteur (2) présente au moins une unité de détection (3) pour acquérir une grandeur physique et est configuré pour générer des données (9) de capteur sur la base de la grandeur physique respectivement acquise,
l'envoi périodique (S3) d'une balise (10) au moyen d'une deuxième unité de sortie (5) du capteur (2) dans le réseau de production participative (12), dans lequel la balise (10) est configurée pour générer des informations de position dans le réseau de production participative (12),
la réception (S4) de la balise (10) par un appareil participant (11) du réseau de production participative (12),
la génération (S5) d'informations de position sur la base de la balise (10) et d'une position de l'appareil participant (11),
le transfert (S6) des informations de position à une unité de collecte (6) de données et
la réception et l'enregistrement (S7) des données (9) de capteur et/ou des informations de position par l'unité de collecte (6) de données.
